# EUROPEAN PATENT APPLICATION

(11) **EP 3 072 749 A1**
(43) Date of publication of application: **28.09.2016**
(21) Application number: 15193775.2
(22) Date of filing: 10.11.2015
(51) Int. Cl.: B60R 16/027, H02G 11/00

(54) **PRE-ASSEMBLED PIVOTING ARRANGEMENT AND CABLE-GUIDING ARRANGEMENT**

(30) Priority: 26.03.2015 DE 102015104664
(71) Applicant: Newfrey LLC, New Britain, CT 06053 (US)
(72) Inventor: Ducornait, Pierre-Yves, 35394 Giessen (DE); Stau, Bastian, 35394 Giessen (DE)
(74) Representative: Witte, Weller & Partner Patentanwälte mbB

(57) **Abstract**

Pre-assembled pivoting arrangement (108) for a cable-guiding arrangement (20), with a pivoting arm (40) which has a journal (56) which is aligned with a pivot axis (42), and a bearing part (32) which has a bearing shell section (64) which surrounds a partial circumference of the journal (56), wherein a cam (70) is formed on the bearing part (32) in the region of the bearing shell section (64), said cam engaging behind the journal (56) when the latter is inserted into the bearing shell section (64), and therefore the pivoting arm (40) and the bearing part (32) are pre-assembled captively on each other.

## Description

The present invention relates to a pre-assembled pivoting arrangement for a cable-guiding arrangement, which can be used in particular for a motor vehicle sliding door, with a pivoting arm which has a journal which is aligned with a pivot axis, and with a bearing part which has a bearing shell section which surrounds a partial circumference of the journal.

Furthermore, the present invention relates to a cable-guiding arrangement, in particular for a motor vehicle sliding door, with a basic support which is fastenable on a base, such as a motor vehicle body, and with a pivoting arm which is mounted pivotably with respect to the basic support by means of a pivoting bearing and through which at least one electric cable can be guided.

Finally, the present invention relates to a motor vehicle with a sliding or pivoting door opening and with a sliding or a pivoting door, wherein a cable-guiding arrangement of the type referred to above is fixed in the region of the sliding or pivoting door opening.

It is customary in modern vehicles to arrange electric loads in the doors and flaps of motor vehicles. These can include, for example, motors for window openers, external lights, internal lights, etc. In the case of sliding doors, this can also be, for example, a motor, by means of which the sliding door can be opened and closed in a motorized manner.

In normal pivoting doors and pivoting flaps (tailgates, engine-compartment covers, etc.), one section of the door or flap in each case remains relatively close to the same part of a vehicle body, for example to an A pillar or the like.

Consequently, the provision of a flexible line connection between the vehicle body and the door or flap is generally comparatively unproblematical.

It is a different matter in sliding doors. The latter are offset in parallel to a section of a vehicle body, and therefore the distance between a transfer point on the body and a transfer point on the sliding door may differ greatly depending on whether the sliding door is opened or closed.

In order to solve this problem, a current supply device for a sliding structure has been proposed, for example, in the document DE 10 2006 049 992 B4. A cable form (harness) is fixed on a sliding structure, such as a sliding door, by a cable form fastening part and a fixed base. A pivoting part is attached to the fixed base and can pivot in a horizontal plane so that the vertical displacement section can be twisted along the circumferential direction thereof, and therefore part of the cable form can be guided to a fixed structure, such as a vehicle body. It is also known in this connection, instead of a fixed base, to mount a sliding piece in a housing so as to be in engagement in a slidable manner with a guide rail.

The documents DE 10 2006 061 638 B4 and DE 10 2006 061 641 B4 disclose a further cable form installation arrangement, in which an articulation arm pivotably holds a moveable body, such as a sliding door, on a fixed body, such as a vehicle body. A cable form is attached to the articulation arm such that said cable form extends along the articulation arm. An upwardly extending section of the cable form is twisted during movement of the articulation arm, in order to absorb a pivoting movement of the pivoting arm without additional devices for receiving an excess length of the cable form.

The abovementioned structures are relatively complicated in respect of production and in respect of installation.

It is also known to fix a basic support on the vehicle body, said basic support, in conjunction with a bearing part, forming a pivoting bearing for a pivoting arm, through which a cable strand can be guided. The bearing part here is screwed from the outside onto a visible side of the basic support. The basic support and the bearing part each form a bearing shell section which extends over approximately 180°, and therefore the bearing part and the basic support together completely surround a journal of the pivoting arm. In this known structure, the basic support is fixed in the lower region of a C pillar of a vehicle with a sliding door in such a manner that the bearing part is visible from the outside when the sliding door is opened. Both the bearing part and a visible side of the basic support therefore have to meet exacting aesthetic requirements.

Against this background, it is an object of the invention to indicate an improved pre-assembled pivoting arrangement, an improved cable-guiding arrangement and an improved motor vehicle with such a cable-guiding arrangement, wherein in particular at least one of the abovementioned disadvantages is overcome or is at least alleviated.

The above object is achieved in the case of the pre-assembled pivoting arrangement mentioned at the beginning in that a cam is formed on the bearing part in the region of the bearing shell section, said cam engaging behind the journal when the latter is inserted into the bearing shell section, and therefore the pivoting arm and the bearing part are pre-assembled captively on each other.

Furthermore, the above object is achieved by a cable-guiding arrangement of the type mentioned at the beginning, wherein the pivoting bearing is formed at least by the basic support and a bearing part, and wherein the pivoting arm and the bearing part are formed by the pre-assembled pivoting arrangement according to the invention.

Finally, the above object is achieved by a motor vehicle with a sliding or pivoting door opening and with a sliding or pivoting door, wherein a cable-guiding arrangement of the type according to the invention is fixed in the region of the sliding or pivoting door opening or in the region of the sliding or pivoting door.

By means of the formation of the bearing shell section with a cam which engages behind the journal of the pivoting arm, a captive pre-assembly of pivoting arm and bearing part can be achieved. The outlay on logistics for producing a cable-guiding arrangement can thereby be significantly reduced. The final installation of the cable-guiding arrangement can also be simplified in this manner. In the present case, the term "cam" should be understood in broad terms. It means any configuration of the bearing shell section in such a manner that the journal of the pivoting arm can be captively grasped, in particular can be fixed in a latching manner.

The pivoting arm is preferably a hollow pivoting arm and/or is preferably formed by two half shells which are fixed on each other in a latching manner. The journal is preferably formed by one of the two half shells.

The pivoting arm preferably has two journals. Preferably for the second journal, the bearing part can comprise a complete, that is to say, annular, journal receptacle in such a manner that the pivoting arm is accommodated with its second journal in the journal receptacle of the bearing part and is engaged behind by the cam in the region of the first journal. A particularly secure pre-assembly of bearing part and pivoting arm can thereby be realized.

The cam is preferably designed in the manner of a latching cam, and therefore the journal can engage behind the cam in a latching manner. In conjunction with the cam, the bearing shell section here preferably extends by more than 180°, and therefore the journal can be securely held by the bearing part. During the latching-in operation, an elastic deformation of the bearing part and/or of the pivoting arm can occur in the region of the journal.

Furthermore, an axial securing section for the pivoting arm is preferably formed on the bearing part. By this means, when the pivoting arm is pre-assembled on the bearing part, axial movements of the pivoting arm with respect to the bearing part can be prevented. In the pre-assembled state, the pivoting arm is preferably pivotable about the pivot axis with respect to the bearing part.

In the cable-guiding arrangement according to the invention, it is advantageous that the latter can be formed by the basic support and the pre-assembled pivoting arrangement. The number of installation steps can thereby be reduced, specifically, in particular, in the case of the final installation. The basic support of the cable-guiding arrangement can be fixed, for example, on a stationary base, such as a vehicle body, but can also be fixed on a pivoting or sliding door.

In order to complete the pivoting bearing, the basic support preferably has a counter bearing shell for the journal which is captively engaged behind by the cam of the bearing shell section of the bearing part. The counter bearing shell for the journal preferably extends here over an angle of less than 180°, in particular less than 120°.

In the case of the motor vehicle according to the invention, the cable-guiding arrangement is preferably mounted in a region of the C pillar, in particular in a lower region in the vicinity of a lower edge of a sliding door.

The object is therefore completely achieved.

In the case of the pre-assembled pivoting arrangement according to the invention, it is particularly preferred if at least one cable is fixed on the bearing part of the pre-assembled pivoting arrangement.

The cable can be fixed on the bearing part either directly or via a plug-in connection. In some cases, the cable can also just be pulled through a channel. A cable or a cable strand can therefore be fixed on the pre-assembled pivoting arrangement. The pre-assembled pivoting arrangement here can preferably include all of the electric cables which are intended to be laid between body and door of a motor vehicle. The cables can generally be current-guiding cables, but can also comprise data lines. Furthermore, the cables can be electric cables, but can also be optical cables.

It is particularly preferred if the cable fixed on the bearing part is laid through the pivoting arm.

In this embodiment, the pivoting arm is designed as a hollow pivoting arm. The cable or the cable strand is therefore laid immediately so as to fasten the pre-assembled pivoting arrangement later simply to a basic support of a cable-guiding arrangement.

Furthermore, it is preferred overall if at least one plug-in connecting element is mounted on the bearing part of the pre-assembled pivoting arrangement.

The plug-in connecting element can be connected, for example, to one or more cables of a cable strand which is fixed on the bearing part. For example, such a plug-in connecting element can serve to produce a connection to an electrical system of a motor vehicle, wherein the electrical system can comprise both a current supply and a data network.

A cable which is pre-assembled on the bearing part can have a counter plug-in connecting element which is already plugged into the plug-in connecting element.

In the case of the cable-guiding arrangement according to the invention, it is particularly preferable if a bearing part connected to the pivoting arm is connected in a latching manner to a bearing part receptacle of the basic support.

This embodiment is considered to be a dedicated invention in conjunction with the precharacterizing clause of Claim 5.

The bearing part can consequently be connected to the basic support in an individual working step without the use of additional fastening elements. In particular, it is not necessary to connect the bearing part to the basic support by means of screws.

It is particularly advantageous here if the bearing part receptacle of the basic support has a longitudinal guiding section into which a longitudinal web section of the bearing part is introduced.

In this embodiment, the basic concept of the latching connection between bearing part and basic support consists in that the bearing part is pushed in a longitudinal direction into the bearing part receptacle. The connection between longitudinal guiding section and longitudinal web section preferably ensures an interlocking connection between bearing part and basic support in all directions transversely with respect to the longitudinal direction. The latching connection between bearing part and bearing part receptacle preferably ensures a frictional or interlocking connection in the longitudinal direction.

It is particularly preferred if two longitudinal guiding sections which are arranged offset in the longitudinal direction are arranged on the basic support, and if two longitudinal web sections which are arranged offset in the longitudinal direction are arranged on the bearing part.

In this embodiment, even a relatively long bearing part can be fixed on the basic support securely and so as to hardly vibrate.

The longitudinal guiding section can be aligned here as desired with respect to the pivot axis, but is preferably aligned in parallel with the pivot axis of the pivoting bearing.

By this means, the pre-assembled pivoting arrangement can be connected particularly favourably and effectively to the basic support.

According to a further, overall preferred embodiment, the bearing part receptacle of the basic support is provided with a transverse clamping section by means of which the bearing part is clamped with respect to the basic support in a direction transversely with respect to the longitudinal direction.

The effect which can be achieved by this measure is that the bearing part can be fastened to the basic support not only captively, but in particular also in a manner secure against vibration and free from rattling.

If two longitudinal guiding sections which are spaced apart in the longitudinal direction are provided on the basic support, a transverse clamping section is preferably provided in the region of a longitudinal guiding section which is spaced apart in the longitudinal direction from an insertion opening.

Latching means for latchingly fixing of the bearing part on the basic support can be provided, for example, in the region of a longitudinal guiding section which is adjacent to an introducing opening into the bearing part receptacle. A transverse clamping section is preferably not provided in this region of the bearing part receptacle.

According to a further, overall preferred embodiment which constitutes a dedicated invention in conjunction with the precharacterizing clause of Claim 5, the basic support has a visible side and a rear side, wherein a bearing part which is connected to the pivoting arm is fixed on the rear side of the basic support.

In this embodiment, the cable-guiding arrangement can be mounted on a base, such as a vehicle body, in such a manner that only the visual range of the basic support is visible from the outside. The bearing part is arranged at least predominantly on the rear side of the basic support and is consequently not visible from the outside, but rather is accommodated in a body cavity or the like.

However, the bearing part preferably extends with that section which forms the pivoting bearing for the pivoting arm beyond an edge of the basic support. Said section which extends beyond the basic edge and on which the pivoting arm is mounted pivotably is consequently likewise at least partially visible from the outside. The pivoting arm here can be pivoted preferably from a position in alignment with said edge into a position pivoted in relation to said edge of the basic support.

The visible side of the basic support is preferably not provided with any plunge cuts for the mould release of undercuts. A free end of the pivoting arm can be connected, for example, to a cable-guiding chain, the other end of which can be connected to a guide rail or to a slide for a sliding door.

The basic support can be of substantially plate-like design, and therefore said basic support can overlap a cut out provided previously in the vehicle body in the region, for example, of a C pillar. The basic support can have, for example, an individual opening through which a screw connection for fixing the basic support on the vehicle body can be plugged.

The rear side of the basic support can be provided with a multiplicity of fastening lugs which enter openings in a base during the installation on a vehicle body in order thereby to be able to fix the basic support on the base in a manner secure against vibration and secure against rotation, even if only a single screw is used for the fixing.

Preferably, consequently, a pivoting arm which can consist in particular of two U shells is fitted with a cable or a cable strand and can be pre-fixed in a bearing part. Depending on requirements, the bearing part can then be additionally extended by the function of a cable guide and/or also for the fastening of plugs. The bearing part which is fitted with the pivoting arm is preferably pushed and clipped onto a basic support in a second step. The pivoting arm is then mounted between the bearing part and the basic support. This pre-assembled cable-guiding arrangement can then be delivered to a vehicle manufacturer and installed on the body. A simple installation which can take place without additional tools arises. In addition, the installation is cost-effective since no thread-rolling screws are required for fastening the bearing part.

It goes without saying that the features which are mentioned above and those which have yet to be explained below can be used not only in the respectively stated combination but also in different combinations or on their own without departing from the scope of the present invention.

Exemplary embodiments of the invention are illustrated in the drawing and are explained in more detail in the description below. In the drawing:
- Fig. 1: shows a schematic illustration of a motor vehicle with a cable-guiding arrangement according to the invention;
- Fig. 2: shows a schematic perspective view of an embodiment according to the invention of a cable-guiding arrangement;
- Fig. 3: shows a partial longitudinal sectional view through a cable-guiding arrangement of the type according to the invention;
- Fig. 4: shows a schematic illustration of a bearing part and a basic support before a latching connection;
- Fig. 5: shows a perspective illustration of a bearing part and a pivoting arm before a pre-assembly according to the invention;
- Fig. 6: shows the bearing part and the pivoting arm from Fig. 5 during the pre-assembly;
- Fig. 7: shows the bearing part and the pivoting arm from Fig. 5 after the pre-assembly;
- Fig. 8: shows the bearing part of Figs. 5 to 7 without the pivoting arm before a latching fixing on a basic support;
- Fig. 9: shows a top view of a cable-guiding arrangement of the type according to the invention;
- Fig. 10: shows a sectional view along the line X-X from Fig. 9;
- Fig. 11: shows the cable-guiding arrangement from Fig. 9 in an installation situation in a motor vehicle on a C pillar, specifically as seen from the visible side; and
- Fig. 12: shows the cable-guiding arrangement from Fig. 11, illustrated from the rear side.

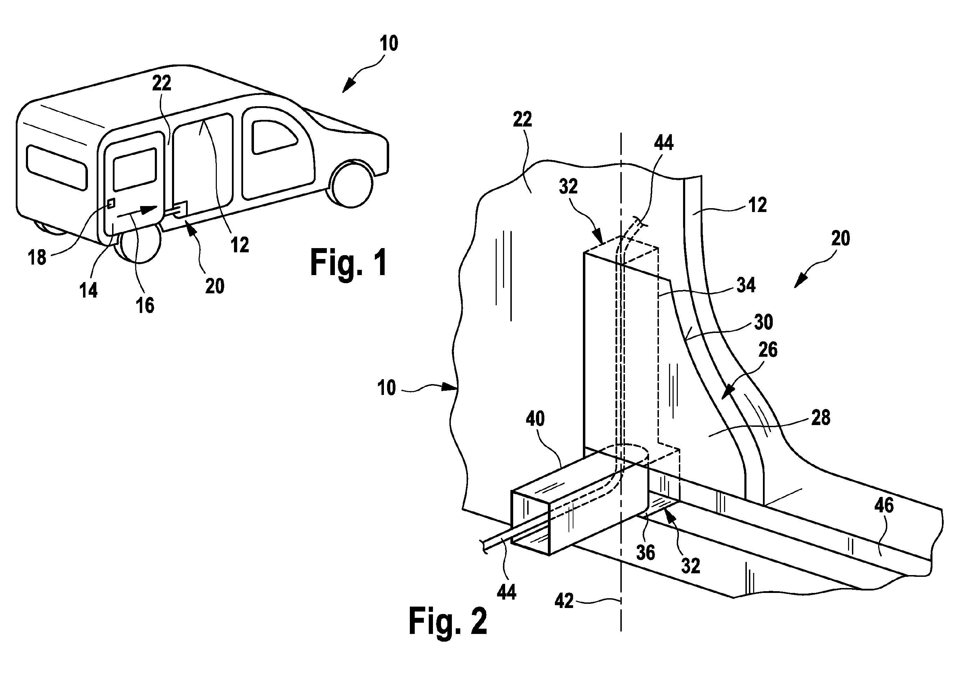

Fig. 1 illustrates, in schematic form, a motor vehicle 10 which has a body with a sliding door opening 12 which can be closed by a sliding door 14. Fig. 1 illustrates the sliding door schematically and open. The closing direction is shown at 16. Furthermore, it is schematically indicated in Fig. 1 that at least one electric load 18 can be contained in the sliding door 14. In order to supply said electric load 18 from the electric system of the motor vehicle 10, a cable-guiding arrangement 20 is provided which is arranged in the lower region of a C pillar 22 and thereby flexibly connects the body to the sliding door 14.

Fig. 2 schematically illustrates a cable-guiding arrangement 20 of this type. The cable-guiding arrangement 20 here has a basic support 26 which is of substantially plate-like design in order to cover an opening in the C pillar 22, and which has a visible side 28 and a rear side 30.

The cable-guiding arrangement 20 furthermore comprises a bearing part 32 which is fixed on the rear side 30 of the basic support 26. The bearing part 32 comprises a fastening section 34 which is arranged on the rear side 30 of the basic support 26 and is generally not visible from the outside, and also a pivoting bearing section 36. The pivoting bearing section 36 protrudes in relation to the basic support 26, specifically preferably in relation to a lower edge of the basic support 26, as illustrated in Fig. 2.

The cable-guiding arrangement 20 furthermore has a pivoting lever 40. The pivoting lever 40 is mounted pivotably with respect to the basic support 26 about a pivot axis 42. The pivot axis 42 runs approximately parallel to the extent of the basic support 26 and is located, as seen from the outside, behind the basic support 26. The pivot axis 42 here can be aligned in parallel with a longitudinal axis of the bearing part 32. The basic support 26, the bearing part 32 and the pivoting lever 40 can each be produced from metal, but are preferably produced from plastic, for example by injection moulding.

The cable-guiding arrangement 20 furthermore comprises a cable 44 which is illustrated schematically in Fig. 2. Said cable-guiding arrangement 20 extends from a region in the interior of the body along the rear side 30 of the basic body 26, preferably at least through one section of the bearing part 32, specifically into the pivoting lever 40, from the free end of which the cable 44 emerges, as indicated schematically in Fig. 2.

The free end of the pivoting lever 40 can be connected, for example, to a cable-guiding chain, the free end of which can be connected in turn to a slide which is fixed on the sliding door in order thereby to connect the cable to the sliding door via the cable-guiding arrangement 20.

The pivoting lever 40 is shown in Fig. 2 in a pivoted-out position in which the pivoting lever 40 protrudes in relation to the planar extent of the basic support 26. The basic support 26 is aligned approximately in parallel with a longitudinal axis of the motor vehicle, and therefore, in the illustration of Fig. 2, the pivoting lever 40 extends laterally from the body, specifically towards the sliding door 14. When the sliding door 14 is closed, the pivoting lever 40 is pivoted into a chain duct or a guide rail 46 which is indicated schematically in Fig. 2. In this position, the pivoting lever 40 is then aligned approximately in parallel with the longitudinal axis of the motor vehicle and with the planar extent of the basic support 26.

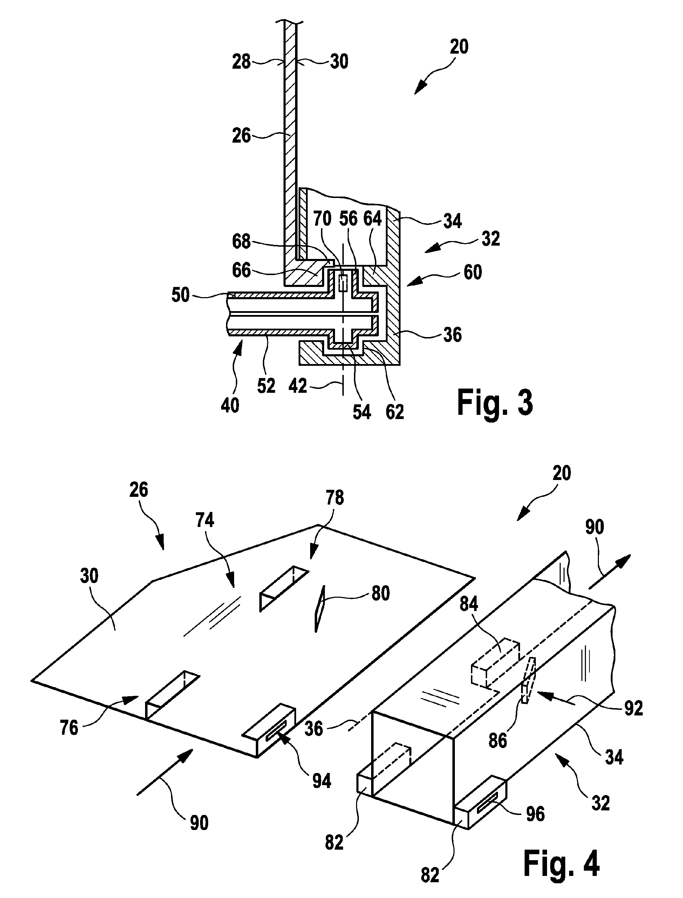

Fig. 3 shows a schematic longitudinal sectional view through a cable-guiding arrangement 20 according to the invention. The latter generally corresponds in respect of construction and function to the cable-guiding arrangement 20 which is shown in Fig. 2. Identical elements are therefore indicated by the same reference numbers. Essentially the differences are explained below.

In the case of the cable-guiding arrangement 20 of Fig. 3, the pivoting lever 40 is formed by an upper part 50 and a lower part 52. The upper part 50 and the lower part 52 can in each case be U-shaped in cross section. The upper part 50 and the lower part 52 can be connected to each other by latching connections.

The pivoting lever 40 furthermore has a first journal 54 and a second journal 56. The journals 54, 56 are aligned with the pivot axis 42. The first journal 54 is a lower journal and is formed by the lower part 52. The second journal 56 is an upper journal and is formed by the upper part 50.

The basic support 26 and the bearing part 32 form a pivoting bearing 60 for the pivoting lever 40. The pivoting bearing 60 has a circular journal receptacle 62 in the bearing part 32. The first journal 54 is accommodated in the journal receptacle 62.

The second journal 56 is mounted by means of a bearing shell section 64 of the bearing part 32 and by means of a counter bearing shell section 66 of the basic support 26. Furthermore, an axial bearing section 68 can be formed on the bearing part 32 and/or on the basic support 26, by means of which axial bearing section 68 the axial position of the pivoting lever 40 is fixed with respect to the arrangement consisting of basic support 26 and bearing part 32 fastened thereto. The pivoting bearing 60 permits free pivoting of the pivoting lever 40 about the pivot axis 42.

The second journal 56 is preferably designed as a hollow pin through which a cable can be introduced into the hollow pivoting lever 40.

Fig. 3 furthermore illustrates a cam schematically at 70. The cam 70 is part of the bearing shell section 64 of the bearing part 32, by means of which the second journal is mounted rotatably.

One or two cams which is or are formed preferably in the region of the circumferential ends of the bearing shell section 64 can be provided on the bearing shell section 64, which preferably extends over at least 180°. Accordingly, it is possible to latch the second journal 56 into the bearing shell section 64, wherein the cam 70 or the cams 70 engages or engage behind the second journal 56, and therefore the bearing part 32 of the pivoting lever 40 can form a pre-assembled pivoting arrangement.

Fig. 4 illustrates in schematic form how the basic support 26 and the bearing part 32 of a cable-guiding arrangement 20 can, by way of example, be connected.

The connection between the basic support 26 and the bearing part 32 is preferably a purely latching connection. In other words, the bearing part 32 is clipped onto the basic support 26. Fastening elements, such as screws or the like, are preferably not required here.

For this purpose, a bearing part receptacle 74 is formed on the basic support 26.

In the present embodiment, the bearing part receptacle 74 has a first longitudinal guiding section 76 and a second longitudinal guiding section 78 which is spaced apart in a longitudinal direction from the first longitudinal guiding section 76. The longitudinal guiding sections 76, 78 are formed on the rear side 30 of the basic support 26. Furthermore, the bearing part receptacle 74 has a transverse clamping section 80 which is arranged allocated to the second longitudinal guiding section 78.

The bearing part 32 illustrated in Fig. 4 can have a fastening section 34 extending in a longitudinal direction. At an axial end, the bearing part 32 can have a first longitudinal web section 82 which is allocated to the first longitudinal guiding section 76. Furthermore, the bearing part 32 can have a second longitudinal web section 84 which is allocated to the second longitudinal guiding section 78. Finally, a transverse web 86 which can enter into engagement with the transverse clamping section 80 can be formed on the bearing part 32.

A direction for the introduction of the bearing part 32 into the bearing part receptacle 74 is indicated by 90 in Fig. 4.

The bearing part 32 is pushed here in the longitudinal direction into the bearing part receptacle 74. In an end position, the first longitudinal web section 82 and the first longitudinal guiding section 76 enter into engagement with each other, and also the second longitudinal web section 84 enters into engagement with the second longitudinal guiding section 78. Furthermore, the transverse web 86 enters into engagement with the transverse clamping section 80, and therefore a transverse clamping force 92 is exerted on the bearing part 32 by the basic support 26 via the transverse clamping section 80.

Furthermore, first latching means 94 which can be formed, for example, in the region of the first longitudinal guiding section 76 are provided on the basic support 26. Second latching means 96 which can be formed, for example, on the first longitudinal web section 82 are formed on the bearing part 32. In the latching position, the first latching means 94 and the second latching means 96 act on each other in such a manner that the bearing part 32 is fixed on the basic support 26 in a latching manner.

The engagement between the longitudinal guiding sections 76, 78 and the longitudinal webs 82, 84 ensures that the bearing part 32 is fixed on the basic support 26 in directions transversely with respect to the longitudinal direction. The bearing part 32 is fixed in a latching manner in the longitudinal direction with respect to the basic support 26 via the latching means 94, 96. In order in particular to avoid vibrations or the like between the bearing part 32 and the basic support 26, the transverse clamping force 92 acts via the engagement of transverse clamping section 80 and transverse web 86.

The above illustration of a bearing part receptacle 74 was purely by way of example. It is crucial that the bearing part 32 is fixed at least by the fastening section 34 thereof, which is illustrated in Fig. 4, on the rear side 30 of the basic support 26 in a latching manner. For reasons of clearer illustration, the pivoting bearing section 36 of the bearing part 32 is not shown in Fig. 4.

As can be seen in Fig. 4, the first longitudinal guiding section 76 is formed by two L-shaped holders which are spaced apart from each other in a direction transversely with respect to the longitudinal axis. The second longitudinal guiding section 78 is formed by an L-shaped holder. The L-shaped holders are preferably formed integrally with the basic support 26.

Furthermore, the bearing part 32 has two first longitudinal webs 82 which are provided on sides which are opposite in the transverse direction and on which in each case preferably a second latching means 96 is formed.

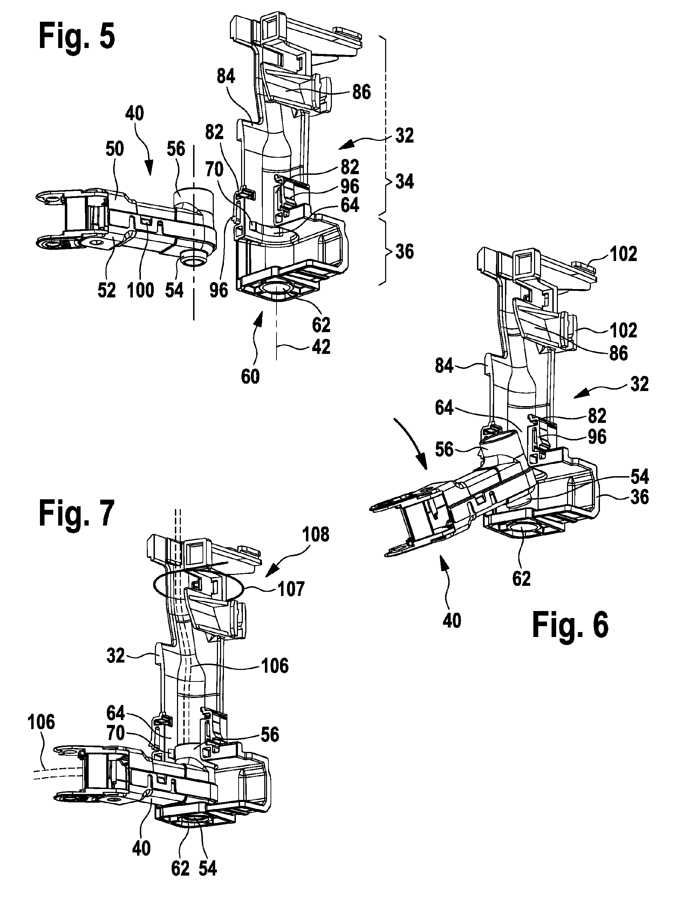

Figs 5 to 12 below show a further embodiment of a cable-guiding arrangement 20 which generally corresponds in respect of construction and function to the cable-guiding arrangement 20 of Figs 2 to 4. Identical elements are therefore indicated by the same reference numbers. Essentially the differences are explained below.

It is first of all explained with reference to Figs 5 to 7 that the bearing part 32 and the pivoting lever 40 can form a pre-assembled pivoting arrangement.

For this purpose, the pivoting lever 40 and the bearing part 32 are initially provided separately, as is shown in Fig. 5. The pivoting lever 40 is subsequently inserted obliquely into the pivoting bearing section 36 of the bearing part 32 in order to introduce the first journal 54 into the journal receptacle 62. Furthermore, in the process, the second journal 56 is pressed into the bearing shell section 64 in the radial direction (radial with respect to the pivot axis 42) until one or two cams 70 provided in the region of the bearing shell section 64 engages or engage behind the second journal 56, as illustrated in Fig. 7. The cam 70 or the cams 70 engages or engage behind the second journal 56 in such a manner that the latter is engaged around by the bearing shell section 64 and the cam 70 by more than 180°, and therefore the pivoting lever 40 is pre-assembled on the bearing part 32 in a latching manner.

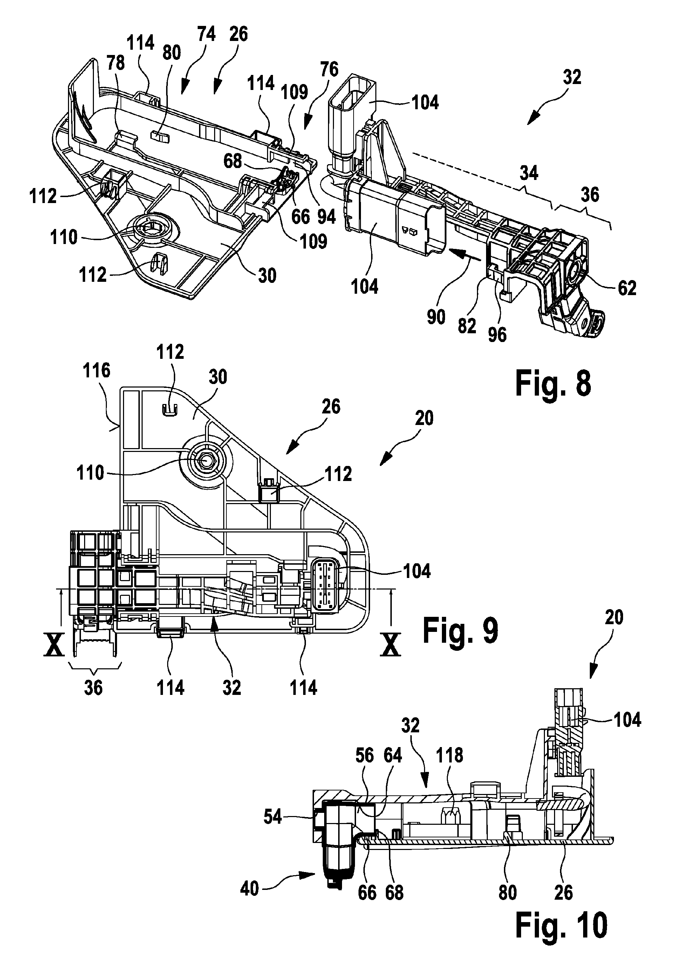

Furthermore, it can be seen in Fig. 5 that the pivoting lever 40 is formed by an upper part 50 and a lower part 52 which are connected to each other via pivoting lever latching means 100. Furthermore, as is illustrated in Fig. 6, plug-in connector receptacles 102 are formed on the bearing part 32, specifically for plug-in connector elements 104, as are subsequently shown in Fig. 8.

After the pre-assembly of bearing part and pivoting lever, a cable 106 can be mounted on said pre-assembled pivoting arrangement 108 formed in this manner, as is shown in Fig. 7, wherein the cable 106 extends along the bearing part 32 and is optionally fastened there by means of a cable connector 107, wherein the cable 106 is furthermore introduced through the hollow second journal 56 into the pivoting lever 40, and finally emerges from the second end (free end) thereof.

Fig. 8 shows the cable-guiding arrangement 20 in a similar situation as in Fig. 4. In this case, the bearing part 32, which is fitted in the present case with two plug-in connector elements 104 which are placed or latched onto the plug-in connector receptacles 102, is pushed in an introduction direction 90 into the bearing part receptacle 74 of the basic support 26. Fig. 8 illustrates the bearing part 32 without pivoting lever 40.

It can be seen that, as in the case of the embodiment of Fig. 4, the first longitudinal guiding section 76 has two L-shaped guiding elements 109 into which the first longitudinal web sections 82 of the bearing part 32 can be pushed. Furthermore, second latching means 96 which can engage in a latching manner in first latching means 94 in the form of openings in the L-shaped guide elements 109 are formed on the first longitudinal web sections 82.

Furthermore, Fig. 8 features an individual second longitudinal guiding section 78 and an allocated transverse clamping section 80 on the basic support 26. The second longitudinal web section 84 which is allocated to the second longitudinal guiding section 78 cannot be seen in Fig. 8 because of the plug-in connector element 104. However, this longitudinal web section 84 can be seen, for example, in Fig. 6.

Fig. 6 also shows the transverse web 86 of the bearing part 32, which transverse web comes into engagement with the transverse clamping section 80 of the basic support 26.

Fig. 8 furthermore shows a fastening hole 110 which extends through the basic support 26 and via which the basic support 26 can be fixed on a vehicle body, for example by means of a screw connection or the like. Furthermore, one or more fastening lugs 112 protrude in relation to the rear side 30 of the basic support 26 and, in the installed state, engage in openings in the vehicle body in order thereby to be able to fix the basic support 26 on the body in a manner secured against rotation.

Finally, one or more fastening projections 144 are provided on an edge of the basic support 26 and can be used to fix the basic support 26 on a sheet edge of the body.

Fig. 9 and Fig. 10 show the cable-guiding arrangement 20 of Figs 5 to 8 in the assembled state. It is seen that the pivoting bearing section 36 of the bearing part 32 protrudes in relation to a basic support edge 116 of the basic support 26.

Furthermore, it can be seen, for example, in Fig. 10 that the second journal 56 is mounted rotatably by means of the bearing shell section 64 of the bearing part 32 and by means of a counter bearing section 66 of the basic support 26 and is held in the axial position thereof by an axial bearing section 68 of the basic support 26.

A nut which can optionally be pre-assembled on the fastening hole 110 and serves to produce a connection with the body is illustrated in Fig. 10 at 118.

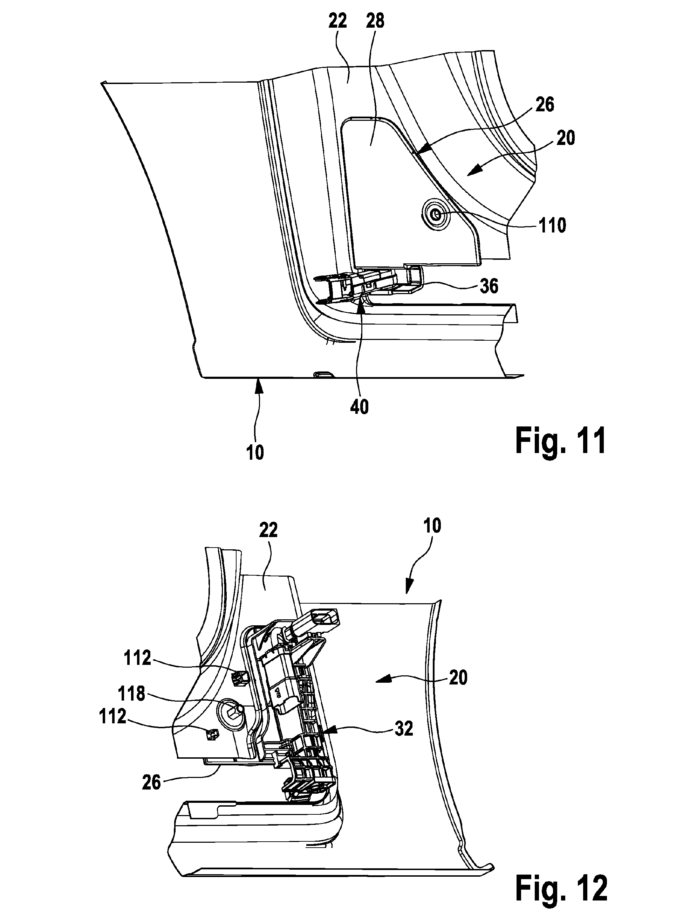

This connection to the body is illustrated in Figs 11 and 12. It is seen that the basic support 26 overlaps an opening in the body sheet in the region of the C pillar 22. The illustration substantially corresponds to the schematic illustration of Fig. 2.

Fig. 12 shows the rear side of this arrangement, wherein it can be seen that the fastening lugs 112 are passed through holes in the body sheet in order to ensure a secure connection between the body sheet and the basic support. Fig. 12 furthermore shows the nut 118 by means of which the basic support 26 is screwed down on the body in the region of the C pillar.

## Claims

1. Pre-assembled pivoting arrangement (108) for a cable-guiding arrangement (20), with
- a pivoting arm (40) which has a journal (56) which is aligned with a pivot axis (42), and
- a bearing part (32) which has a bearing shell section (64) which surrounds a partial circumference of the journal (56),
**characterized in that** a cam (70) is formed on the bearing part (32) in the region of the bearing shell section (64), said cam engaging behind the journal (56) when the latter is inserted into the bearing shell section (64), and therefore the pivoting arm (40) and the bearing part (32) are pre-assembled captively on each other.

2. Pre-assembled pivoting arrangement according to Claim 1, **characterized in that** at least one cable (106) is fixed on the bearing part (32) of the pre-assembled pivoting arrangement (108).

3. Pre-assembled pivoting arrangement according to Claim 2, **characterized in that** the cable (106) fixed on the bearing part (32) is laid through the pivoting arm (40).

4. Pre-assembled pivoting arrangement according to one of Claims 1 - 3, **characterized in that** at least one plug-in connecting element (102, 104) is mounted on the bearing part (32) of the pre-assembled pivoting arrangement (108).

5. Cable-guiding arrangement (20), in particular for a motor vehicle sliding door (14), with
- a basic support (26) which is fixable on a base (10, 22), and
- a pivoting arm (40) which is mounted pivotably with respect to the basic support (26) by means of a pivoting bearing (60) and through which at least one electric cable (106) can be guided,
**characterized in that** the pivoting bearing (60) is formed at least by the basic support (26) and a bearing part (32), wherein the pivoting arm (40) and the bearing part (32) are formed by the pre-assembled pivoting arrangement according to one of Claims 1 - 4.

6. Cable-guiding arrangement according to Claim 5 or according to the precharacterizing clause of Claim 5, **characterized in that** a bearing part (32) connected to the pivoting arm (40) is connected in a latching manner to a bearing part receptacle (74) of the basic support (26).

7. Cable-guiding arrangement according to Claim 6, **characterized in that** the bearing part receptacle of the basic support (26) has a longitudinal guiding section (76, 78) into which a longitudinal web section (82, 84) of the bearing part (32) is introduced.

8. Cable-guiding arrangement according to Claim 7, **characterized in that** the longitudinal guiding section (82, 84) is aligned in parallel with a pivot axis of the pivoting bearing (60).

9. Cable-guiding arrangement according to one of Claims 6 - 8, **characterized in that** the bearing part receptacle (74) of the basic support (26) has a transverse clamping section (80) by means of which the bearing part (32) is clamped with respect to the basic support (26) in a direction (92) transversely with respect to the longitudinal direction.

10. Cable-guiding arrangement according to one of Claims 5 - 9 or according to the precharacterizing clause of Claim 5, **characterized in that** the basic support (26) has a visible side (28) and a rear side (30), wherein a bearing part (32) which is connected to the pivoting arm (40) is fixed on the rear side (30) of the basic support (26).

11. Motor vehicle (10) with a sliding or pivoting door opening (12) and with a sliding or a pivoting door (14), wherein a cable-guiding arrangement (20) according to one of Claims 5 - 10 is fixed in the region of the sliding or pivoting door opening (12) or in the region of the sliding or pivoting door (14).
